# EUROPEAN PATENT SPECIFICATION

(11) **EP 4 539 413 B1**
(45) Date of publication and mention of the grant of the patent: **13.05.2026**
(21) Application number: 24205162.1
(22) Date of filing: 08.10.2024
(51) Int. Cl.: H04L 41/0631, H04L 41/069, H04L 43/026, H04L 43/18, H04L 69/18, H04L 69/22, H04L 41/16

(54) **METHOD FOR RESOLVING ERRORS IN A COMMUNICATION SYSTEM**
VERFAHREN ZUR FEHLERBEHEBUNG IN EINEM KOMMUNIKATIONSSYSTEM
PROCÉDÉ DE RÉSOLUTION D'ERREURS DANS UN SYSTÈME DE COMMUNICATION

(30) Priority: 11.10.2023 FI 20236127
(43) Date of publication of application: 16.04.2025
(73) Proprietor: Nokia Solutions and Networks Oy, 02610 Espoo (FI)
(72) Inventor: RIEMER, Joachim, Stuttgart (DE); SIENEL, Juergen, Leonberg (DE); GARG, Seema, Delhi (IN); KHAN, Manzoor, New Providence (US)
(74) Representative: Novagraaf Technologies

(56) References cited:
- US-B1- 8 209 756
- FINSTERBUSCH MICHAEL ET AL: "A Survey of Payload-Based Traffic Classification Approaches", IEEE COMMUNICATIONS SURVEYS & TUTORIALS, IEEE, USA, vol. 16, no. 2, 1 April 2014 (2014-04-01), pages 1135 - 1156, XP011547654, DOI: 10.1109/SURV.2013.100613.00161

## Description

### TECHNICAL FIELD

The present invention relates to resolving error situations in communication systems.

### BACKGROUND

Communication flow, i.e. call/message flow, in a communication network, such as in 5G network, is always prone to errors. The communication networks are provided with network monitoring systems, which enable a user (a.k.a. operator) of the network monitoring system to detect various error situations in the network and carry out corrective measures.

In modern communication networks, the call/message flow across the various parts and network elements of the network typically takes place using several protocols on the path of the call/message flow. However, the concurrent network monitoring systems are typically only able to trace packets inside a single protocol flow, or in some cases within a fixed hierarchy of protocols having the same key to match messages of the protocols.

This becomes problematic especially in a situation, where a randomly occurring or a sporadic error happens in a message flow, especially if it happens in a message flow involving a plurality of protocols, i.e. in a so-called multi-protocol message flow. Sporadic errors are poorly detected by statistical methods, and the concurrent network monitoring systems are not able to trace errors across multiple protocols and correlate them to the same call flows.

US patent US8209756 B1 relates to an intrusion detection and prevention device that monitors network traffic and integrates textual and non-textual pattern matching with protocol-specific anomaly detection to identify sophisticated attack behaviors. Document by Finsterbush et al, entitled 'A survey of Payload-based Traffic Classification Approaches", published in IEEE Communications Surveys & Tutorials, in April 2014, discloses a survey for evaluating known open-source Deep Packet Inspection (DPI) traffic classification solutions.

### SUMMARY

Now, improved methods and technical equipment implementing the methods have been invented, by which the above problems are alleviated. Various aspects include a system, multiple apparatus and non-transitory computer readable media comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims.

### BRIEF DESCRIPTION OF THE DRAWINGS

For a more complete understanding of the example embodiments, reference is now made to the following descriptions taken in connection with the accompanying drawings in which:
Fig. 1 illustrates a high-level architecture of a 5G/6G network;
Fig. 2 illustrates an exemplifying architecture of a 5G/6G generation network;
Fig. 3 shows an IMS network in an illustrative embodiment;
Fig. 4 shows a flow chart of a method according to an embodiment;
Fig. 5 shows a logical architecture of an apparatus according to an embodiment;
Figs. 6a - 6e show exemplifying UI presentations of a network monitoring system according to an embodiment;
Fig. 7 illustrates different user/network element interfaces along a possible call/message flow; and
Fig. 8 shows a block chart of an apparatus according to an embodiment.

### DETAILED DESCRIPTON OF SOME EXAMPLE EMBODIMENTS

The following describes in further detail suitable apparatus and possible mechanisms for resolving error situations in a communication network. Before discussing the present embodiments in more detailed manner, a short reference to related technology is given.

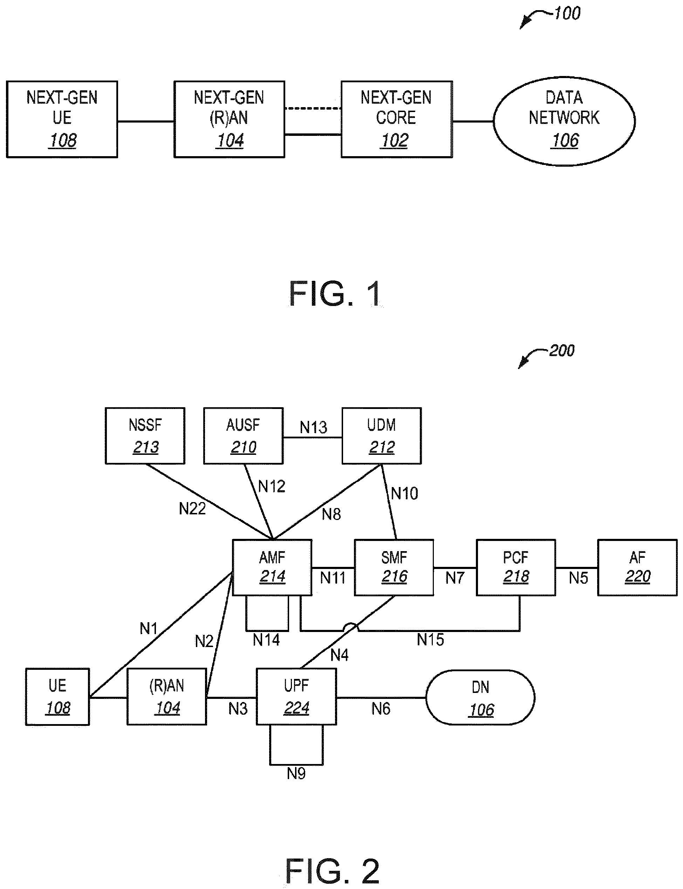

Figure 1 illustrates a high-level architecture of a 5G/6G network 100 as described in the Third Generation Partnership Project (3GPP) TR 23.799 (v14.0.0). Next generation network 100 includes a next generation (Next-Gen) core network 102, and a next generation access network and/or radio access network ((R)AN) 104. (R)AN 104 may support Evolved-UMTS Terrestrial Radio Access Network (E-UTRAN) access, Wireless Local Area Network (WLAN) access, fixed access, satellite radio access, new Radio Access Technologies (RAT), etc. Core network 102 interconnects (R)AN 104 with a data network (DN) 106. Data network 106 may be an operator external public or private data network, or an intra-operator data network (e.g., for IMS services). Next generation User Equipment (UE) 108 is configured to attach to (R)AN 104 to access services from core network 102.

Figure 2 illustrates a non-roaming architecture 200 of a 5G/6G generation network. The architecture in FIG. 2 is a reference point representation, as is further described in 3GPP TS 23.501 (v1.5.0). Architecture 200 is comprised of Network Functions (NF) for core network 102, which may be implemented either as a network element on dedicated hardware, as a software instance running on dedicated hardware, or as a virtualized function instantiated on an appropriate platform (e.g., a cloud infrastructure). The network functions for the control plane are separated from the user plane. The control plane of core network 102 includes an Authentication Server Function (AUSF) 210, a Unified Data Management (UDM) 212, a Network Slice Selection Function (NSSF) 213, an Access and Mobility Management Function (AMF) 214, a Session Management Function (SMF) 216, a Policy Control Function (PCF) 218, and an Application Function (AF) 220. The user plane of core network 102 includes one or more User Plane Functions (UPF) 224 that communicate with data network (DN) 106. A UE 108 is able to access the control plane and the user plane of core network 102 through (R)AN 104.

AUSF 210 is configured to support authentication of UE 108. UDM 212 is configured to store subscription data/information for UE 108. UDM 212 may store three types of user data: subscription, policy, and session-related context (e.g., UE location). AMF 214 is configured to provide UE-based authentication, authorization, mobility management, etc. SMF 216 is configured to provide the following functionality: session management (SM), UE Internet Protocol (IP) address allocation and management, selection and control of UPF(s), termination of interfaces towards PCF 218, control part of policy enforcement and Quality of Service (QoS), lawful intercept, termination of SM parts of NAS messages, Downlink Data Notification (DDN), roaming functionality, handle local enforcement to apply QoS for Service Level Agreements (SLAs), charging data collection and charging interface, etc. If UE 108 has multiple sessions, different SMFs may be allocated to each session to manage them individually and possibly provide different functionalities per session. PCF 218 is configured to support a unified policy framework to govern network behavior, and to provide policy rules to control plane functions for QoS enforcement, charging, access control, traffic routing, etc. AF 220 provides information on a packet flow to PCF 218. Based on the information, PCF 218 is configured to determine policy rules about mobility and session management to make AMF 214 and SMF 216 operate properly.

UPF 224 supports various user plane operations and functionalities, such as packet routing and forwarding, traffic handling (e.g., QoS enforcement), an anchor point for Intra-RAT/Inter-RAT mobility (when applicable), packet inspection and policy rule enforcement, lawful intercept (UP collection), traffic accounting and reporting, etc. Data network 106 is not part of core network 102, and provides Internet access, operator services, 3rd party services, etc. For instance, the International Telecommunication Union (ITU) has classified 5G mobile network services into three categories: Enhanced Mobile Broadband (eMBB), Ultra-reliable and Low-Latency Communications (uRLLC), and Massive Machine Type Communications (mMTC) or Massive Internet of Things (MIoT). eMBB focuses on services that have high bandwidth requirements, such as HD videos, Virtual Reality (VR), and Augmented Reality (AR). uRLLC focuses on latency-sensitive services, such as automated driving and remote management. mMTC and MIoT focuses on services that include high requirements for connection density, such as smart city and smart agriculture. Data network 106 may be configured to provide these and other services.

Architecture 200 includes the following reference points. The N1 reference point is implemented between UE 108 and AMF 214. The N2 reference point is implemented between (R)AN 104 and AMF 214. The N3 reference point is implemented between (R)AN 104 and UPF 224. The N4 reference point is implemented between the SMF 216 and UPF 224. The N5 reference point is implemented between PCF 218 and AF 220. The N6 reference point is implemented between UPF 224 and data network 106. The N7 reference point is implemented between the SMF 216 and PCF 218. The N8 reference point is implemented between UDM 212 and AMF 214. The N9 reference point is implemented between two UPFs 224. The N10 reference point is implemented between UDM 212 and SMF 216. The N11 reference point is implemented between AMF 214 and SMF 216. The N12 reference point is implemented between AMF 214 and AUSF 210. The N13 reference point is implemented between UDM 212 and AUSF 210. The N14 reference point is implemented between two AMFs. The N15 reference point is implemented between PCF 218 and AMF 214 in the case of a non-roaming scenario. The N22 reference point is implemented between NSSF 213 and AMF 214.

IP Multimedia Subsystem (IMS) is a network solution that delivers rich real-time communication or telecommunication services for both consumer and business users over any access network and for any device types, including smartphones, tablets, wearables, laptops, and fixed phones. Examples of IMS communication services are HD voice, Wi-Fi calling, enriched messaging, enriched calling with pre-call information, video calling, HD video conferencing, VoD, web communication, etc. IMS provides one common system for IP-based communication services.

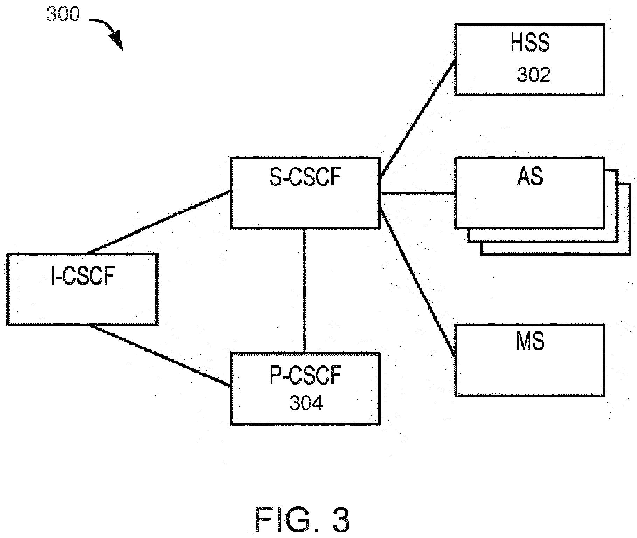

Figure 3 illustrates an IMS network 300 in an illustrative embodiment. IMS network 300 is a collection of different functions that are linked by standardized interfaces. For example, IMS network 300 includes a Home Subscriber Server (HSS) 302, a Proxy-Call Session Control Function (P-CSCF) 304, an Interrogating-CSCF (I-CSCF) 306, and a Serving-CSCF (S-CSCF) 308 of a control layer (or control plane). IMS network 300 also includes Application Servers (AS) 310 and Media Servers (MS) 312 of an application layer (or user plane). The entities of the control layer handle the signaling messages (e.g., Session Initiation Protocol (SIP)) to support a session. For example, HSS 302 is a database that stores subscription-related information or subscriber profiles for users of IMS terminals (also referred to as UE or IMS UE). A P-CSCF 304 is a SIP proxy that is the first point of contact for an IMS terminal. The P-CSCF 304 is assigned to an IMS terminal before registration, and sits on the signaling path to inspect the signaling messages. I-CSCF 306 queries HSS 302 for an address of the S-CSCF 308, and forwards requests/responses to the S-CSCF 308. S-CSCF 308 is the central node of the signaling plane. S-CSCF 308 has knowledge of the services subscribed to by the users, and is responsible for enabling the services by contacting the appropriate application server 310. The entities of the application layer process data, store data, and provide services for IMS terminals. Application server 310 is part of the service/application plane, and hosts and executes IMS-specific services, such as IP telephony and multimedia services. IMS is intended to be access independent, which means that the service delivery is implemented regardless of the device and the access medium, so the UEs and the access network are not shown in Figure 3.

Communication flow, i.e. call/message flow, in a communication network, such as in 5G network, is always prone to errors. The communication networks are provided with network monitoring systems, which enable a user (a.k.a. operator) of the network monitoring system to detect various error situations in the network and carry out corrective measures, as well as collect and store low level packet traces. The concurrent network monitoring systems typically input the call/message flow as files, which are often referred to as Packet Capture (PCAP) files.

The files may comprise time (absolute or relative) of the packet captures, source and destination address of the packet (e.g., IP-addresses), headers of the different layers of the protocol stacks, and content of the packet including e.g., encapsulated higher layer protocols. Based on the information about the call/message flows, the concurrent network monitoring systems typically detect error situation by statistical methods, such as log-file analysis or KPI anomaly detection.

In modern communication networks, the call/message flow across the various parts and network elements of the network typically takes place using several protocols on the path of the call/message flow. For example, in an IP Multimedia subsystem (IMS), network elements involving multiple (connected) protocols in their mutual communication include, for example, different types Call Session Control functions (CSCF), Border Gateway (BGW), Telephony Application Server (TAS), Media Gateway (MGW), Media Resource Function (MRF), HSS/HLR (Home Subscriber Server/Home location register), wherein the related protocols involve at least Session Initiation Protocol (SIP), DIAMETER, Realtime transport (control) protocol RT(C)P, Radio Access Network Application Part (RANAP), etc.

The concurrent network monitoring systems typically comprise decoders for decoding and analysing most of the relevant protocols including IP, UDP, TCP, SIP; RTP; HTTP, DIAMETER, S1AP, RANAP, etc. However, they are typically only able to trace packets inside a single protocol flow, or in some cases within a fixed hierarchy of protocols having the same key to match messages of the protocols.

This becomes problematic especially in a situation, where a randomly occurring or a sporadic error happens in a message flow, especially if it happens in a message flow involving a plurality of protocols, i.e. in a so-called multi-protocol message flow. Sporadic errors are poorly detected by statistical methods, and the concurrent network monitoring systems are not able to trace errors across multiple protocols and correlate them to the same call flows.

Using the traditional process, the user/operator of the network monitoring system would download the packet file into a packet processing tool and try to filter out irrelevant packets and then identify the potential errors by analyzing the different fields in the content of the packets based on his/her experience of previous incidents. This process is time consuming and exhausting for the user/operator and needs deep expertise of the network. The delay in resolving these issues may lead to adverse customer and end-user experience.

Accordingly, there is a need for a method and related apparatus for resolving randomly occurring error situations in the network faster.

In the following, an enhanced method and apparatus for resolving randomly occurring error situations in the network will be described in more detail, in accordance with various embodiments.

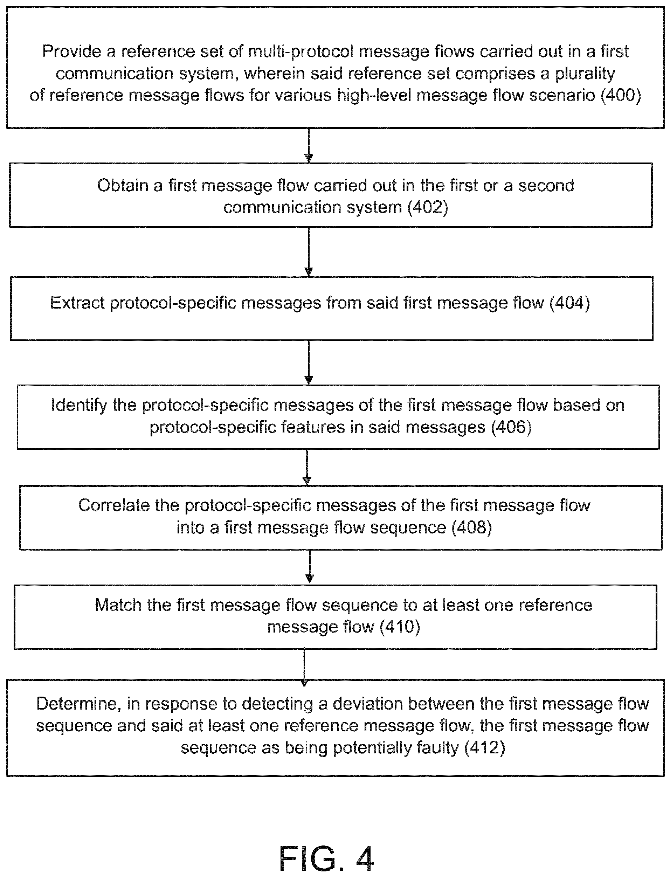

A method according to an aspect of the invention comprises, as shown in Figure 4, providing (400) a reference set of multi-protocol message flows carried out in a first communication system, wherein said reference set comprises a plurality of reference message flows for various high-level message flow scenarios; obtaining (402) a first message flow carried out in the first or a second communication system; extracting (404) protocol-specific messages from said first message flow; identifying (406) the protocol-specific messages of the first message flow based on protocol-specific features in said messages; correlating (408) the protocol-specific messages of the first message flow into a first message flow sequence; matching (412) the first message flow sequence to at least one reference message flow; and determining (414), in response to detecting a deviation between the first message flow sequence and said at least one reference message flow, the first message flow sequence as being potentially faulty.

Thus, to resolve multi-protocol message flows, a reference set of multi-protocol message flows carried out in a communication system is provided. The reference set may comprise a plurality of reference message flows for various high-level message flow scenarios, such as VoLTE to VoLTE call, call forwarding, conference call, etc. It is noted that the reference set may be obtained from the same or another communication system from which the message flows to be analyzed are obtained. For any message flow to be analyzed, all messages of the flow using various protocols are extracted. Protocol-specific messages comprise protocol-specific features, based on which the protocol-specific messages of the message flow are identified.

Based on data fields in the protocol-specific messages that identify the message flow across multiple protocols, all messages belonging to the same flow are correlated into a single message flow sequence or stream. The analyzed message flow sequence is matched to at least one reference message flow. If a deviation between the analyzed message flow sequence and said at least one reference message flow is noticed, the analyzed message flow sequence is determined as being potentially faulty.

Hence, the potentially faulty message flow sequences may be easily highlighted in a network monitoring application of a network operator or a network supplier. While the traditional network monitoring applications using statistical methods may be efficient in resolving common error situations in message flows, the now introduced method is especially useful in detecting more randomly occurring or sporadic errors in message flows. The potentially faulty message flow sequences may thus be presented on a graphical user interface (GUI) of the application to the user (a.k.a. operator) of the application, who may then examine more thoroughly, if the highlighted message flow sequence is actually faulty and, if affirmative, take necessary actions for correcting the error.

According to an embodiment, said extracting protocol-specific messages from said first message flow comprises decoding protocol-specific messages by a corresponding protocol-specific decoder; determining fields of the protocol-specific messages usable for identifying message flow sequences, and providing said fields with associated tags.

Accordingly, due to the multi-protocol message flows, messages of different protocols are decoded by their corresponding protocol-specific decoder. The protocol-specific decoders identify and extract relevant message fields usable for identifying message flow sequences from each message. For example, in SIP protocol such fields include at least *to, from, Cseq, Call-Id, P-Charging-Vector, IMSI, MSISDNID* message fields without limiting to these. Fields that can potentially be used for correlation of decoded messages are tagged for further processing.

In identifying the message fields usable in identifying message flow sequences, protocol-specific characteristics may be utilized. Some protocols have simple request/response types of dialogs, where each request message is answered with a success (e.g. an acknowledgement) message or an error message. Other protocols, like SIP, have more complex state-oriented dialogs, where not every message needs an immediate response and also (call-) state information needs to be maintained between the network elements and not all messages are allowed at every state.

According to an embodiment, a part of the identified fields are usable as cross-protocol tags.

Some of the fields of a specific protocol potentially usable to correlate messages may also appear in other protocols. For example, *MSISDNID* and *IMSI* fields may appear also in DIAMETER messages, etc. Thus, these fields may be provided with tags that are usable as cross-protocol tag, thus facilitating to identify the message flows between other network elements and other protocol types.

According to an embodiment, said correlating the protocol-specific messages of the first message flow into the first message flow sequence comprises matching the protocol-specific messages of different protocols based on the tags; and arranging the protocol-specific messages of different protocols into the first message flow sequence based on a time stamp and/or a sequence number of each protocol-specific message.

Hence, messages of different protocols belonging to the same message flow are matched using the available tagged (cross-)protocol fields and brought into the correct sequence using the time stamp and/or the sequence number of the message.

According to an embodiment, the method comprises determining a high-level message flow scenario for the first message flow sequence; and matching the first message flow sequence to at least one reference message flow having corresponding high-level message flow scenario.

Thus, a high-level message flow scenario is identified for the analyzed message flow sequence on the same precision level as for the reference message flows. The analyzed message flow sequence is matched to at least one reference message flow having a corresponding high-level message flow scenario. Thereby, the number of reference messages to be matched is significantly reduced, as well as the processing time.

According to an embodiment, said determining the high-level message flow scenario for the first message flow sequence comprises arranging the first message flow sequence into a structured data frame; and supplementing the structured data frame with fields associating different messages to the same message flow.

Before matching messages of different protocols belonging to the same message flow into the correct sequence, the extracted messages may be arranged into a predefined structured data frame. The previously identified message fields usable for identifying message flow sequences, thus being relevant for scenario identification and matching, may be filled in predefined fields of the structured data frame. Arranging the messages into the structured data frame may include, for example, filling in specific (error-)codes and matching of different call-legs belonging to the same call flow.

The data fields of multiple structured data frames may be further arranged into a matrix of data entities with extracted features of the call-flow. The matrix may later be used for a high-level scenario detection. Moreover, unusable message flows can be filter out at this stage. For example, message flows that are incomplete since certain messages have not been properly captured, or other dialogs for which a proper matching according to the reference cases is not possible may be removed. Additionally, the structured data frame and/or the matrix enables to collect statistics about the found message flows that helps the user/operator of the network monitoring application to select the right scenarios for matching. The structured data frame may further be supplied with additional fields not directly available in the messages, such as, originating/terminating user/network interface (ouni, onni, tnni, tuni) and access network types.

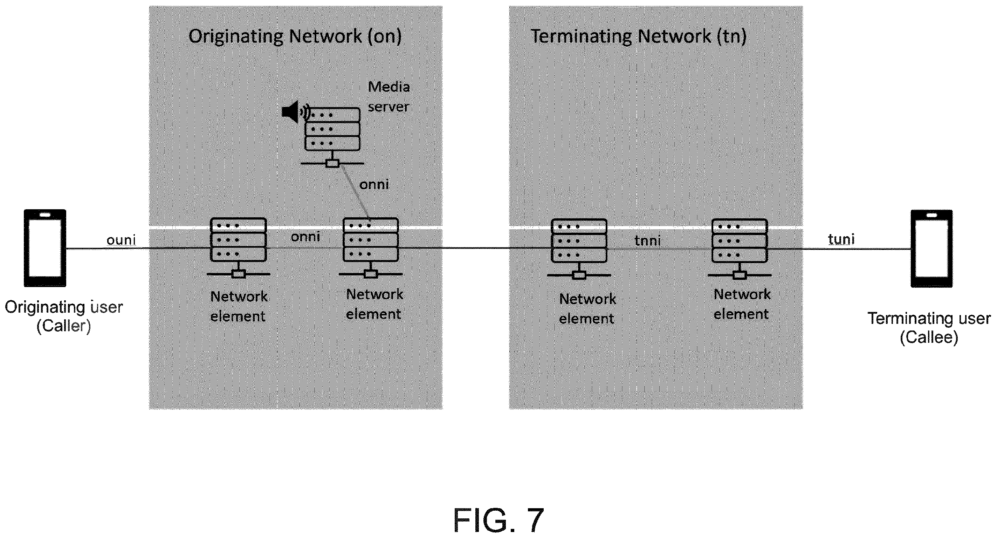

As illustrated in Figure 7, the originating network (on) refers to network elements that are managed by the provider of calling party, while terminating network (tn) refers to network elements belonging to the network provider of the callee. In IMS the end-to-end connectivity may be established using a back-to-back user agent, which terminates the SIP communication e.g. towards the user and sets up a separate communication towards other network elements. Additionally, messages may be exchanged with other network elements in the network. To ease the correlation between the different tagging, identifying different connections belonging to the same call flow including the interface they are serving such as, originating/terminating user/network interface (ouni, onni, tnni, tuni) is supported. Different access network types (5G, 4G, VoWifi, ...) may also be tagged, as they define network elements that may be involved in the correlation of different protocols belonging to the same call flow.

According to an embodiment, said matching the first message flow sequence to at least one reference message flow having corresponding high-level message flow scenario comprises searching a reference message flow providing a minimum measure of similarity to the first message flow sequence.

Thus, the messages of the message flow sequence are finally matched against one or more reference cases to find those cases where a minimum measure of similarity is found. For example, a minimum string distance between the reference message flows and the call flow under test may be searched for. Herein, for example a generalized Wagner-Fischer algorithm may be used, but also other string comparisons may be used, as well as various Artificial Neural Networks (ANN)-based solutions. It is noted that since only those fields that are almost invariant in both call-flows are compared, the distance is independent of complete message content.

According to an embodiment, the method comprises collecting a set of files from one or more network interfaces between a plurality of network elements of the communication system, wherein said set of files comprise packets of multi-protocol message flows; and obtaining said first message flow from said set of files.

As mentioned above, in many network monitoring applications, the message flows are arranged and processed in Packet CAPture (PCAP) files. The PCAP files may comprise a single file collected at a unique network interface on which packets between the involved network elements are passing by, or a multitude of files collected at different network elements. Multiple files may be merged into PCAP files using the time stamps in the packet capture such that the correct sequence flow of relevant protocol messages can be recovered. Thus, any one or multiple message flows to be analysed may obtained from the PCAP files and supplied to the protocol-specific decoders. According to an embodiment, duplicate messages captured at different network elements may be identified and filtered out.

According to an embodiment, the method comprises obtaining a plurality of message flows from said set of files; correlating protocol-specific messages of the plurality of message flows into a plurality of message flow sequences; and identifying a plurality of network elements of the communication system involved in said plurality of message flow sequences.

A plurality of message flows from the PCAP files may be utilised in identifying the network elements involved in said message flows. For example, by correlating the protocol-specific messages from a plurality of message flows against a plurality of message flow sequences, the network elements involved in said plurality of message flow sequences can be identified.

According to an embodiment, the method comprises identifying roles of plurality of network elements of the communication system involved in said plurality of message flow sequences.

The same network address (e.g. the IP-address of the host/network element) may have different roles. For example, an application server may host different roles on different ports. The network elements and their roles may be identified, for example, by the network names as they are visible e.g. in DNS messages, specific message fields (e.g in SIP fields like Route, RecordRoute, To, From, etc.), well-known ports which are characteristic for specific network elements, dedicated messages sent to a network element, etc.

Thus, a list of identified network elements and their specific roles in the network configuration may be obtained to support in identifying correlated messages to a specific flow, thereby enabling a better identification of potential error issues in the message/call flows. The list may be obtained e.g., by carrying out an analysis as protocol/port correlation, or for host names and other parameters that can be derived from the decoded traffic.

According to an embodiment, the method comprises adding the first message flow sequence into the reference set of multi-protocol message flows.

Once the message flow sequence has been resolved, it can be added to the reference set of multi-protocol message flows. Thus, the reference set eventually becomes larger, and it may cover a wider set of various multi-protocol message flows, against which the comparison may be made. If the comparison is carried out as an AI/ML (Artificial Intelligence/Machine Learning) process, the one or more resolved message flow sequences may be used as training data for the AI/ML model.

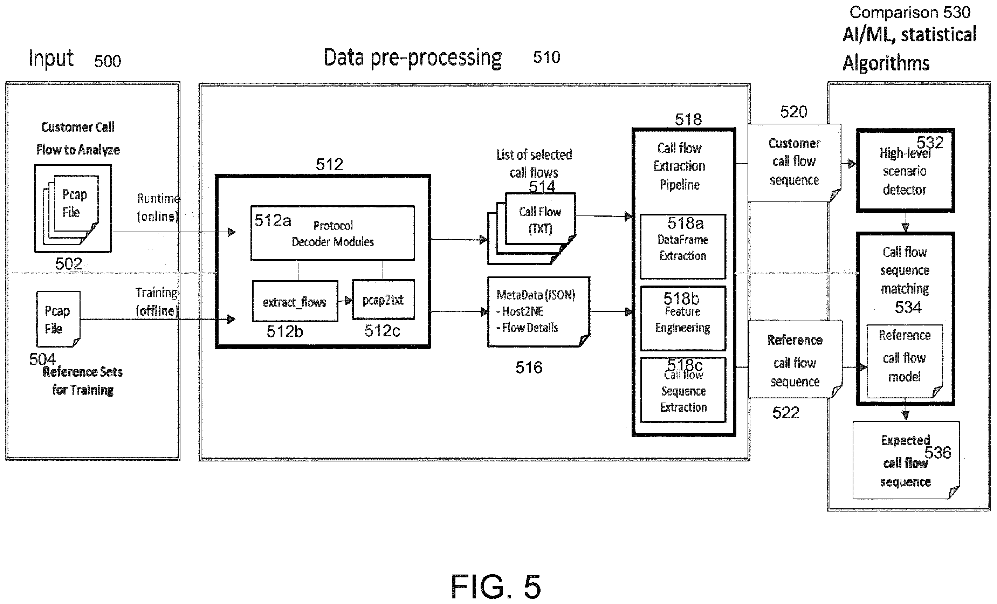

An implementation example of the embodiments is described by referring to Figure 5. The embodiments may be realized as a computer implemented software in an apparatus comprises at least one processor and at least one memory, said at least one memory stored with computer program code thereon, the at least one memory and the computer program code configured to, with the at least one processor, cause the apparatus to perform the embodiments.

In Figure 5, the SW architecture is logically divided into three units, input unit 500, data pre-processing unit 510 and comparison unit 530, which may be implemented, for example, as an AI/ML model or as process utilising statistical algorithms.

The input unit 500 includes collecting the call (message) flows for analysis. This may be implemented as a collection of relevant Packet CAPture (PCAP) files 502. The PCAP files may comprise single files collected a network interface between the involved network elements, or a multitude of files collected at different network elements. The input unit 500 also includes the reference set of multi-protocol message flows 504, which may also comprise PCAP files gathered from call (message) flows previously carried out in the same or in another communication system.

The PCAP files comprise a set of packets in a correct sequence that can be passed to a protocol analysis unit 512, which comprises an extendable set of protocol specific decoders 512a that identify and extract 512b all relevant fields from each message. This may also include tagging the potential message fields that can be used for correlation in each decoded message. The PCAP files may then be exported 512c into e.g., a text format (txt).

From the output of the protocol analysis unit 512 the protocol-specific messages of the first message flow are correlated into the first message flow sequence, where messages of different protocols are matched using the available tagged protocol fields and brought into the correct message flow sequence, for example, using the time stamp and/or the sequence number of the messages. Thus, a list of selected call flows 514 is obtained, which includes one or more call (message) flows arranged into e.g., a text format. Herein, alternative formats, such as json structures or comma-separated values (csv), may also be used.

The output of the protocol analysis unit 512 may also be used for obtaining a list of identified network elements 516 and their specific role in the network configuration to support the user with a better identification of potential issues. The list may be obtained e.g., by carrying out an analysis as protocol/port correlation, or for host names and other parameters that can be derived from the decoded traffic.

The list of selected call flows 514 and the list of identified network elements 516 are supplied to the call flow extraction pipeline 518.

The data frame extraction unit 518a arranges the extracted message into a structured data frame and fills in different message fields, which are relevant for scenario identification and matching. This may include, for example, filling in specific (error-)codes and matching of different call-legs belonging to the same call flow.

The feature engineering unit 518b may filter out, for example, flows that are incomplete since certain messages have not been properly captured and cannot therefore be used for analysis, or other dialogs for which a proper matching according to the reference cases is not possible. Additionally, the feature engineering unit 518b may collect statistics about the found call-flows that helps the user/operator of the network monitoring application to select the right scenarios for matching. The feature engineering unit 518b may also add additional fields not directly available in the messages, such as, originating/terminating user/network interface (ouni, onni, tnni, tuni) and e.g access network types.

The call flow sequence extraction unit 518c then correlates the protocol-specific messages of the analyzed message flow into an extracted message flow sequence, for which a high-level message flow scenario is determined. The extracted message flow sequence, also referred to as customer call flow sequence 520 is then supplied to the comparison unit 530.

It is noted that all the steps described up to now are performed not only for the potentially erroneous flows but also for obtained reference flows 504. This results in the extracted reference message flow sequence, also referred to as reference call flow sequence 522, which is also supplied to the comparison unit 530. Thus, reference call-flows and customer provided call flows are in the same format, which then are used in the comparison phase to match the unknown call flows to pre-trained reference cases.

In the high-level scenario detector 532, the high-level message flow scenario of the analyzed message flow is detected. In the call flow sequence matching unit 534, one or more reference call flows having preferably the same or at least the same high-level message flow scenario are fetched for comparison. The analyzed message flow sequence is matched to one or more reference message, and an expected call flow sequence 536 is output as a result of the matching. Deviations from the expected content is marked. If a deviation between the analyzed message flow sequence and said at least one reference message flow is noticed, the analyzed message flow sequence is determined as being potentially faulty.

The potentially faulty message flow sequences may thus be presented on a graphical user interface (GUI) of the application to the user (a.k.a. operator) of the network monitoring application. For example, a list of best matches may be identified, which can then be presented, for example as a side-by-side comparison on the GUI. The identified differences between the reference call flow and customer call flow may be highlighted to enable the user/operator to analyse the reasons easily further for the potential issue.

For emphasizing the benefits obtained through the illustrative presentation of the analysis results on a GUI of a network monitoring application, some exemplifying UI presentations are shown.

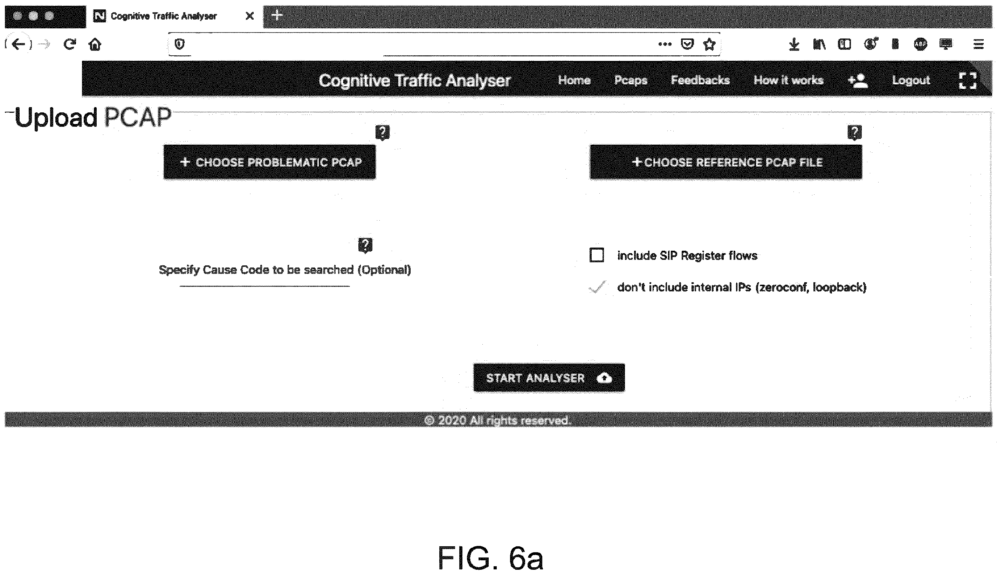

Figure 6a shows an example of a file upload page, where the user/operator may upload the PCAP file(s) that should be processed. By adding problematic PCAP files, each file will be loaded onto the server. Multiple files could be loaded at the same time. The user may also add a specific reference file to match against the problematic PCAP. After all files have been uploaded, the analysis can be started.

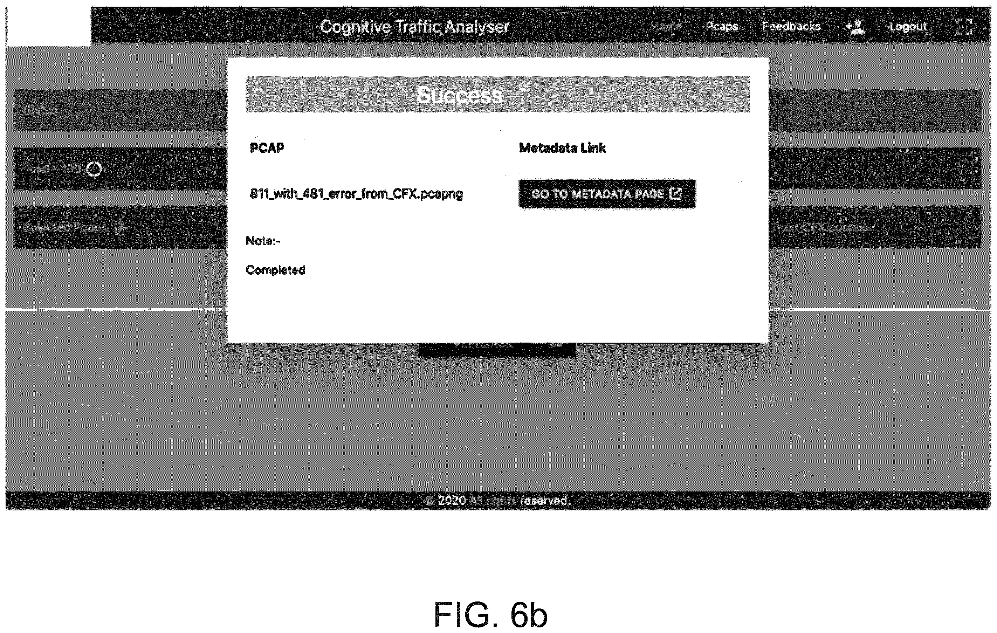

During the analysis, which may take some time depending on the size of the PCAP files, a status page about the progress may be presented to the user. After completion, a box indicating success or failure will be presented, such as the example of Figure 6b. The user may then proceed directly to the list of identified call flows.

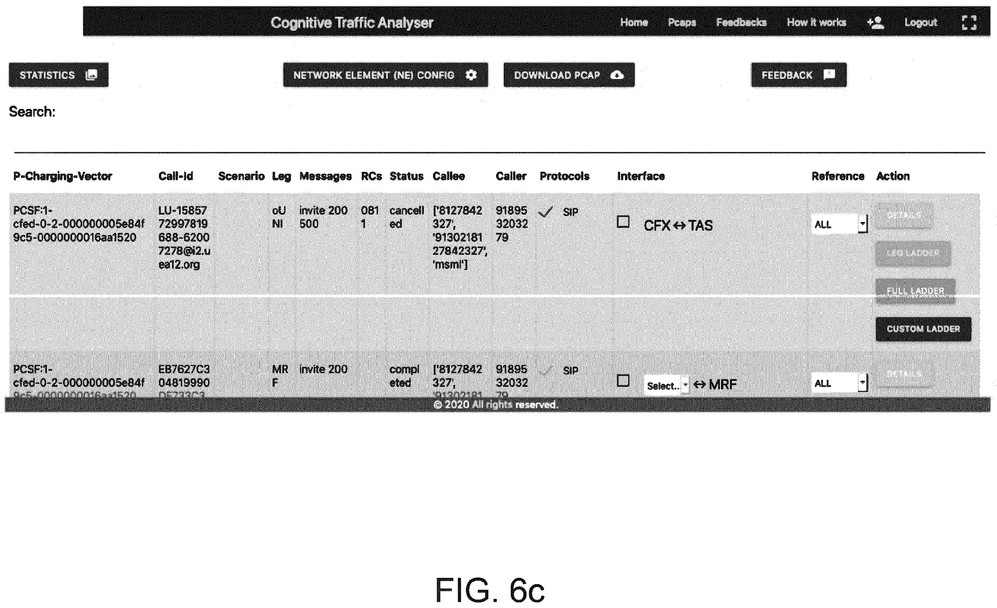

Figure 6c shows an example of a call flow list. The call flow list presents all identified call flows to user. Flows which potentially might be problematic are highlighted, for example in red. For example, a flow containing faulty messages may be highlighted in red, and a flow containing potentially faulty messages may be highlighted in yellow. When opening the message sequence diagram of the corresponding flow, these messages are marked in the corresponding color. In the case of Figure 6c, the first call flow is highlighted as being potentially faulty, because one network element was not able to perform a specific operation. By opening this call flow using the right-hand sided buttons, the user can check the flow with more details.

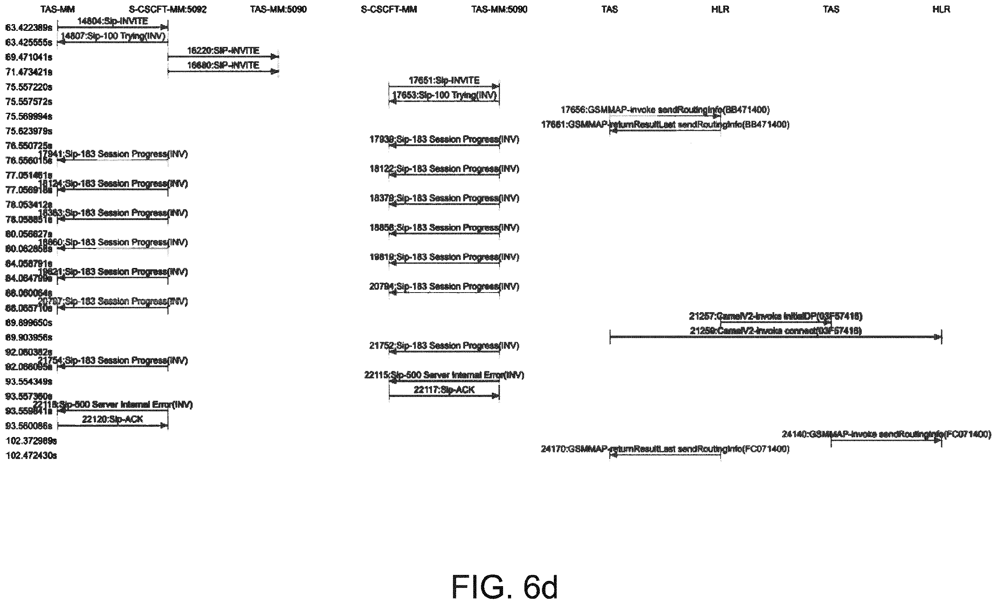

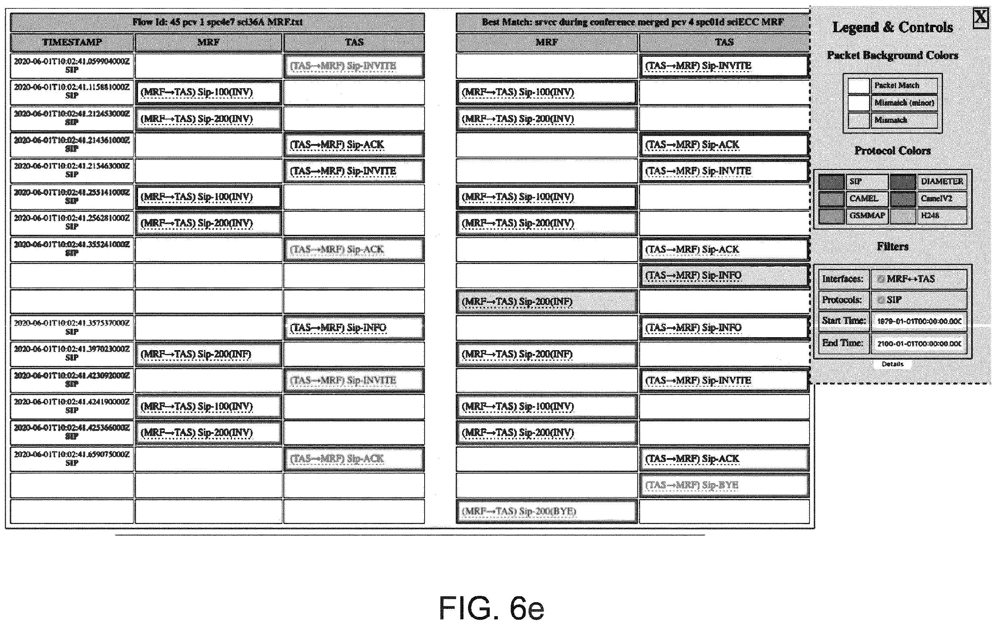

The user may select to check the details using a multi-protocol ladder diagram of all related messages belonging to the flow, as shown in the example of Figure 6d, or a side-by-side comparison with the best matching reference flow, as shown in the example of Figure 6e. The user can select the protocols and the network elements that should be compared. This helps the user to focus on the most relevant issues.

Consequently, the method and the apparatus and the related embodiments may be used for quick isolation of anomalies in the network traffic at the time of system integration as well as for live networks. The method and the apparatus and the related embodiments also enable post-processing of collected errors and online analysis in operational networks if executed fast enough for real-time processing. While it aids in resolving of errors observed in the network at a much faster pace, it also allows the concept to be extended for predictive care of the networks.

An apparatus according to an aspect comprises means for providing a reference set of multi-protocol message flows carried out in a first communication system, wherein said reference set comprises a plurality of reference message flows for various high-level message flow scenarios; means for obtaining a first message flow carried out in the first or a second communication system; means for extracting protocol-specific messages from said first message flow; means for identifying the protocol-specific messages of the first message flow based on protocol-specific features in said messages; means for correlating the protocol-specific messages of the first message flow into a first message flow sequence; means for matching the first message flow sequence to at least one reference message flow; and means for determining, in response to detecting a deviation between the first message flow sequence and said at least one reference message flow, the first message flow sequence as being potentially faulty.

According to an embodiment, said means for extracting protocol-specific messages from said first message flow comprises means for decoding protocol-specific messages by a corresponding protocol-specific decoder; means for determining fields of the protocol-specific messages usable for identifying message flow sequences, and means for providing said fields with associated tags.

According to an embodiment, a part of the identified fields are usable as cross-protocol tags.

According to an embodiment, said means for correlating the protocol-specific messages of the first message flow into the first message flow sequence comprises means for matching the protocol-specific messages of different protocols based on the tags; and means for arranging the protocol-specific messages of different protocols into the first message flow sequence based on a time stamp and/or a sequence number of each protocol-specific message.

According to an embodiment, the apparatus comprises means for determining a high-level message flow scenario for the first message flow sequence; and means for matching the first message flow sequence to at least one reference message flow having corresponding high-level message flow scenario.

According to an embodiment, said means for determining the high-level message flow scenario for the first message flow sequence comprises means for arranging the first message flow sequence into a structured data frame; and means for supplementing the structured data frame with fields associating different messages to the same message flow.

According to an embodiment, said means for matching the first message flow sequence to at least one reference message flow comprises means for searching a reference message flow providing a minimum measure of similarity to the first message flow sequence.

According to an embodiment, the apparatus comprises means for collecting a set of files from one or more network interfaces between a plurality of network elements of the communication system, wherein said set of files comprise packets of multi-protocol message flows; and means for obtaining said first message flow from said set of files.

According to an embodiment, the apparatus comprises means for obtaining a plurality of message flows from said set of files; means for correlating protocol-specific messages of the plurality of message flows into a plurality of message flow sequences; and means for identifying a plurality of network elements of the communication system involved in said plurality of message flow sequences.

According to an embodiment, the apparatus comprises means for identifying roles of plurality of network elements of the communication system involved in said plurality of message flow sequences.

According to an embodiment, the apparatus comprises means for adding the first message flow sequence into the reference set of multi-protocol message flows.

According to an embodiment, the apparatus comprises at least one processor and at least one memory, said at least one memory stored with computer program code thereon, the at least one memory and the computer program code configured to, with the at least one processor, cause the apparatus at least to perform: provide a reference set of multi-protocol message flows carried out in a first communication system, wherein said reference set comprises a plurality of reference message flows for various high-level message flow scenarios; obtain a first message flow carried out in the first or a second communication system; extract protocol-specific messages from said first message flow; identify the protocol-specific messages of the first message flow based on protocol-specific features in said messages; correlate the protocol-specific messages of the first message flow into a first message flow sequence; match the first message flow sequence to at least one reference message flow; and determine, in response to detecting a deviation between the first message flow sequence and said at least one reference message flow, the first message flow sequence as being potentially faulty.

According to an embodiment, the code configured to cause the apparatus to extract protocol-specific messages from said first message flow comprises code configured to cause the apparatus to decode protocol-specific messages by a corresponding protocol-specific decoder; determine fields of the protocol-specific messages usable for identifying message flow sequences; and provide said fields with associated tags.

According to an embodiment, a part of the identified fields are usable as cross-protocol tags.

According to an embodiment, the code configured to cause the apparatus to correlate the protocol-specific messages of the first message flow into the first message flow sequence comprises code configured to cause the apparatus to match the protocol-specific messages of different protocols based on the tags; and arrange the protocol-specific messages of different protocols into the first message flow sequence based on a time stamp and/or a sequence number of each protocol-specific message.

According to an embodiment, the apparatus comprises code configured to cause the apparatus to determine a high-level message flow scenario for the first message flow sequence; and match the first message flow sequence to at least one reference message flow having corresponding high-level message flow scenario.

According to an embodiment, the code configured to cause the apparatus to determine the high-level message flow scenario for the first message flow sequence comprises code configured to cause the apparatus to arrange the first message flow sequence into a structured data frame; and supplement the structured data frame with fields associating different messages to the same message flow.

According to an embodiment, the code configured to cause the apparatus to match the first message flow sequence to at least one reference message flow comprises code configured to cause the apparatus to search a reference message flow providing a minimum measure of similarity to the first message flow sequence.

According to an embodiment, the apparatus comprises code configured to cause the apparatus to collect a set of files from one or more network interfaces between a plurality of network elements of the communication system, wherein said set of files comprise packets of multi-protocol message flows; and obtain said first message flow from said set of files.

According to an embodiment, the apparatus comprises code configured to cause the apparatus to obtain a plurality of message flows from said set of files; correlate protocol-specific messages of the plurality of message flows into a plurality of message flow sequences; and identify a plurality of network elements of the communication system involved in said plurality of message flow sequences.

According to an embodiment, the apparatus comprises code configured to cause the apparatus to identify roles of plurality of network elements of the communication system involved in said plurality of message flow sequences.

According to an embodiment, the apparatus comprises code configured to cause the apparatus to add the first message flow sequence into the reference set of multi-protocol message flows.

Further aspects relate to computer program products, stored on a non-transitory memory medium, comprising computer program code, which when executed by at least one processor, causes an apparatus at least to perform at least to perform said steps.

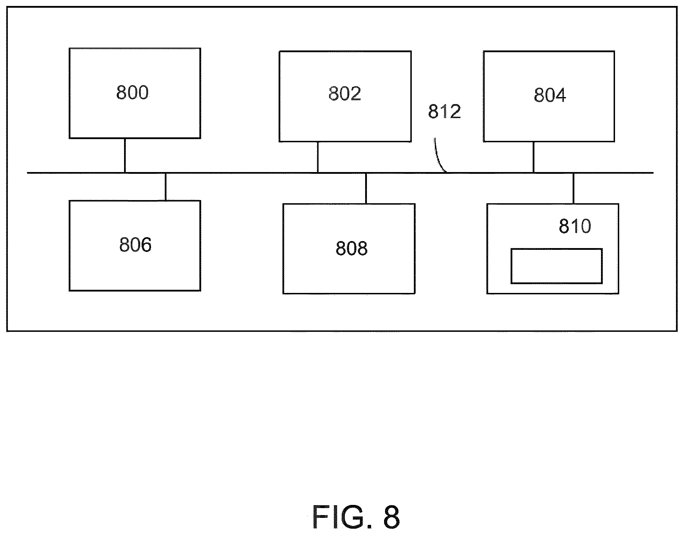

Such apparatuses may comprise e.g. apparatuses and/or the functional units disclosed in Figures for implementing the embodiments. Figure 8 illustrates an apparatus according to an embodiment. The generalized structure of the apparatus will be explained in accordance with the functional blocks of the system. Several functionalities can be carried out with a single physical device, e.g. all calculation procedures can be performed in a single processor, if desired. A data processing system of an apparatus according to an example of Figure 8 comprises a main processing unit 800, a memory 802, a storage device 804, an input device 806, an output device 808, and a graphics subsystem 810, which are all connected to each other via a data bus 812. A client may be understood as a client device or a software client running on an apparatus.

The main processing unit 800 is a processing unit arranged to process data within the data processing system. The main processing unit 800 may comprise or be implemented as one or more processors or processor circuitry. The memory 802, the storage device 804, the input device 806, and the output device 808 may include other components as recognized by those skilled in the art. The memory 802 and storage device 804 store data in the data processing system 800. Computer program code resides in the memory 802 for implementing, for example, machine learning process. The input device 806 inputs data into the system while the output device 808 receives data from the data processing system and forwards the data, for example to a display. While data bus 812 is shown as a single line it may be any combination of the following: a processor bus, a PCI bus, a graphical bus, an ISA bus. Accordingly, a skilled person readily recognizes that the apparatus may be any data processing device, such as a computer device, a personal computer, or a server computer.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

## Claims

1. An apparatus (500) comprising:
means for providing (500) a reference set (504) of multi-protocol message flows carried out in a first communication system, wherein said reference set comprises a plurality of reference multi-protocol message flows having various high-level message flow scenarios, wherein said high-level message flow scenarios correspond to communication services;
means for obtaining (500) a first message flow carried out in the first or a second communication system;
means for extracting (512) protocol-specific messages from said first message flow;
means for identifying (512) the protocol-specific messages of the first message flow based on protocol-specific features in said messages;
means for correlating (518c) the protocol-specific messages of the first message flow into a first message flow sequence;
means for matching (534) the first message flow sequence to at least one reference multi-protocol message flow of said reference set; and
means for determining, in response to detecting a deviation between the first message flow sequence and said at least one reference multi-protocol message flow, the first message flow sequence as being potentially faulty.

2. The apparatus according to claim 1, wherein said means for extracting protocol-specific messages from said first message flow comprises
means for decoding (512a) protocol-specific messages by a corresponding protocol-specific decoder;
means for determining (512b) fields of the protocol-specific messages usable for identifying message flow sequences, and
means for providing (512c) said fields with associated tags.

3. The apparatus according to claim 2, wherein a part of the identified fields are usable as cross-protocol tags.

4. The apparatus according to claim 2 or 3, wherein said means for correlating the protocol-specific messages of the first message flow into the first message flow sequence comprises
means for matching the protocol-specific messages of different protocols based on the tags; and
means for arranging (518a) the protocol-specific messages of different protocols into the first message flow sequence based on a time stamp and/or a sequence number of each protocol-specific message.

5. The apparatus according to any preceding claim, comprising
means for determining (532) a high-level message flow scenario for the first message flow sequence; and
means for matching (534) the first message flow sequence to at least one reference multi-protocol message flow of said reference set having corresponding high-level message flow scenario.

6. The apparatus according to claim 5, wherein said means for determining the high-level message flow scenario for the first message flow sequence comprises
means for arranging the first message flow sequence into a structured data frame; and
means for supplementing the structured data frame with fields associating different messages to the same message flow.

7. The apparatus according to any preceding claim, wherein said means for matching the first message flow sequence to at least one reference multi-protocol message flow of said reference set comprises
means for searching a reference multi-protocol message flow in said reference set, providing a minimum measure of similarity to the first message flow sequence, by comparing string distances between the first message flow sequence with one or more reference multi-protocol message flows of said reference set, the reference multi-protocol message flow providing the minimum string distance being matched to the first message flow sequence.

8. The apparatus according to any preceding claim, comprising
means for collecting a set of files from one or more network interfaces between a plurality of network elements of the communication system, wherein said set of files comprise packets of multi-protocol message flows; and
means for obtaining said first message flow from said set of files.

9. The apparatus according to claim 8, comprising
means for obtaining a plurality of message flows from said set of files;
means for correlating protocol-specific messages of the plurality of message flows into a plurality of message flow sequences; and
means for identifying a plurality of network elements of the communication system involved in said plurality of message flow sequences.

10. The apparatus according to claim 9, comprising
means for identifying roles of plurality of network elements of the communication system involved in said plurality of message flow sequences.

11. The apparatus according to any preceding claim, comprising
means for adding the first message flow sequence into the reference set of multi-protocol message flows.

12. A method comprising:
providing (400) a reference set of multi-protocol message flows carried out in a first communication system, wherein said reference set comprises a plurality of reference multi-protocol message flows for various high-level message flow scenarios, wherein said high-level message flow scenarios correspond to communication services;
obtaining (402) a first message flow carried out in the first or a second communication system;
extracting (404) protocol-specific messages from said first message flow;
identifying (406) the protocol-specific messages of the first message flow based on protocol-specific features in said messages;
correlating (408) the protocol-specific messages of the first message flow into a first message flow sequence;
matching (410) the first message flow sequence to at least one reference multi-protocol message flow of said reference set; and
determining (412), in response to detecting a deviation between the first message flow sequence and said at least one reference message flow, the first message flow sequence as being potentially faulty.

13. The method according to claim 12, wherein said extracting protocol-specific messages from said first message flow comprises
decoding protocol-specific messages by a corresponding protocol-specific decoder; determining fields of the protocol-specific messages usable for identifying message flow sequences, and
providing said fields with associated tags.

14. The method according to claim 13, wherein a part of the identified fields are usable as cross-protocol tags.

15. The method according to claim 13 or 14, wherein said correlating (408) the protocol-specific messages of the first message flow into the first message flow sequence comprises
matching the protocol-specific messages of different protocols based on the tags; and
arranging the protocol-specific messages of different protocols into the first message flow sequence based on a time stamp and/or a sequence number of each protocol-specific message.

## Patentansprüche

1. Vorrichtung (500), umfassend:
Mittel zum Bereitstellen (500) eines Referenzsatzes (504) von Multi-Protokoll-Nachrichtenflüssen, die in einem ersten Kommunikationssystem durchgeführt werden, wobei der Referenzsatz eine Vielzahl von Referenz-Multi-Protokoll-Nachrichtenflüssen mit verschiedenen Nachrichtenfluss-Szenarien auf hoher Ebene umfasst, wobei die Nachrichtenfluss-Szenarien auf hoher Ebene Kommunikationsdiensten entsprechen;
Mittel zum Erhalten (500) eines ersten Nachrichtenflusses, der in dem ersten oder einem zweiten Kommunikationssystem durchgeführt wird;
Mittel zum Extrahieren (512) protokollspezifischer Nachrichten aus dem ersten Nachrichtenfluss;
Mittel zum Identifizieren (512) der protokollspezifischen Nachrichten des ersten Nachrichtenflusses auf der Grundlage von protokollspezifischen Merkmalen der Nachrichten;
Mittel zum Korrelieren (518c) der protokollspezifischen Nachrichten des ersten Nachrichtenflusses zu einer ersten Nachrichtenflusssequenz;
Mittel zum Abgleichen (534) der ersten Nachrichtenflusssequenz mit mindestens einem Referenz-Multi-Protokoll-Nachrichtenfluss des Referenzsatzes; und
Mittel zum Bestimmen, in Reaktion auf das Erkennen einer Abweichung zwischen der ersten Nachrichtenflusssequenz und dem mindestens einen Referenz-Multi-Protokoll-Nachrichtenfluss, dass die erste Nachrichtenflusssequenz potenziell fehlerhaft ist.

2. Vorrichtung nach Anspruch 1, wobei die Mittel zum Extrahieren protokollspezifischer Nachrichten aus dem ersten Nachrichtenfluss
Mittel zum Decodieren (512a) protokollspezifischer Nachrichten durch einen entsprechenden protokollspezifischen Decodierer umfassen;
Mittel zum Bestimmen (512b) von Feldern der protokollspezifischen Nachrichten, die zum Identifizieren von Nachrichtenflusssequenzen verwendbar sind, und
Mittel zum Bereitstellen (512c) der Felder mit zugehörigen Kennzeichnungen.

3. Vorrichtung nach Anspruch 2, wobei ein Teil der identifizierten Felder als protokollübergreifende Kennzeichnungen verwendbar ist.

4. Vorrichtung nach Anspruch 2 oder 3, wobei die Mittel zum Korrelieren der protokollspezifischen Nachrichten des ersten Nachrichtenflusses zu der ersten Nachrichtenflusssequenz
Mittel zum Abgleichen der protokollspezifischen Nachrichten verschiedener Protokolle auf der Grundlage der Kennzeichnungen umfassen; und
Mittel zum Anordnen (518a) der protokollspezifischen Nachrichten verschiedener Protokolle in der ersten Nachrichtenflusssequenz auf der Grundlage eines Zeitstempels und/oder einer Sequenznummer jeder protokollspezifischen Nachricht.

5. Vorrichtung nach einem der vorhergehenden Ansprüche, umfassend
Mittel zum Bestimmen (532) eines Nachrichtenfluss-Szenarios auf hoher Ebene für die erste Nachrichtenflusssequenz; und
Mittel zum Abgleichen (534) der ersten Nachrichtenflusssequenz mit mindestens einem Referenz-Multi-Protokoll-Nachrichtenfluss des Referenzsatzes mit entsprechendem Nachrichtenfluss-Szenario auf hoher Ebene.

6. Vorrichtung nach Anspruch 5, wobei die Mittel zum Bestimmen des Nachrichtenfluss-Szenarios auf hoher Ebene für die erste Nachrichtenflusssequenz
Mittel zum Anordnen der ersten Nachrichtenflusssequenz in einem strukturierten Datenrahmen umfassen; und
Mittel zum Ergänzen des strukturierten Datenrahmens mit Feldern, die verschiedene Nachrichten demselben Nachrichtenfluss zuordnen.

7. Vorrichtung nach einem der vorhergehenden Ansprüche, wobei die Mittel zum Abgleichen der ersten Nachrichtenflusssequenz mit mindestens einem Referenz-Multi-Protokoll-Nachrichtenfluss des Referenzsatzes
Mittel zum Suchen eines Referenz-Multi-Protokoll-Nachrichtenflusses in dem Referenzsatz umfassen, der ein Mindestmaß an Ähnlichkeit mit der ersten Nachrichtenflusssequenz bereitstellt, durch Vergleichen von Zeichenkettenabständen zwischen der ersten Nachrichtenflusssequenz und einem oder mehreren Referenz-Multi-Protokoll-Nachrichtenflüssen des Referenzsatzes, wobei der Referenz-Multi-Protokoll-Nachrichtenfluss, der den minimalen Zeichenkettenabstand bereitstellt, mit der ersten Nachrichtenflusssequenz abgeglichen wird.

8. Vorrichtung nach einem der vorhergehenden Ansprüche, umfassend
Mittel zum Erfassen eines Satzes von Dateien von einer oder mehreren Netzwerkschnittstellen zwischen einer Vielzahl von Netzwerkelementen des Kommunikationssystems, wobei der Satz von Dateien Pakete von Multi-Protokoll-Nachrichtenflüssen umfasst; und
Mittel zum Erhalten des ersten Nachrichtenflusses aus dem Satz von Dateien.

9. Vorrichtung nach Anspruch 8, umfassend
Mittel zum Erhalten einer Vielzahl von Nachrichtenflüssen aus dem Satz von Dateien; Mittel zum Korrelieren protokollspezifischer Nachrichten der Vielzahl von Nachrichtenflüssen zu einer Vielzahl von Nachrichtenflusssequenzen; und
Mittel zum Identifizieren einer Vielzahl von Netzwerkelementen des Kommunikationssystems, die an der Vielzahl von Nachrichtenflusssequenzen beteiligt sind.

10. Vorrichtung nach Anspruch 9, umfassend
Mittel zum Identifizieren von Rollen der Vielzahl von Netzwerkelementen des Kommunikationssystems, die an der Vielzahl von Nachrichtenflusssequenzen beteiligt sind.

11. Vorrichtung nach einem der vorhergehenden Ansprüche, umfassend
Mittel zum Hinzufügen der ersten Nachrichtenflusssequenz zum Referenzsatz von Multi-Protokoll-Nachrichtenflüssen.

12. Verfahren, umfassend:
Bereitstellen (400) eines Referenzsatzes von Multi-Protokoll-Nachrichtenflüssen, die in einem ersten Kommunikationssystem durchgeführt werden, wobei der Referenzsatz eine Vielzahl von Referenz-Multi-Protokoll-Nachrichtenflüssen für verschiedene Nachrichtenfluss-Szenarien auf hoher Ebene umfasst, wobei die Nachrichtenfluss-Szenarien auf hoher Ebene Kommunikationsdiensten entsprechen;
Erhalten (402) eines ersten Nachrichtenflusses, der in dem ersten oder einem zweiten Kommunikationssystem durchgeführt wird;
Extrahieren (404) protokollspezifischer Nachrichten aus dem ersten Nachrichtenfluss;
Identifizieren (406) der protokollspezifischen Nachrichten des ersten Nachrichtenflusses auf der Grundlage von protokollspezifischen Merkmalen der Nachrichten;
Korrelieren (408) der protokollspezifischen Nachrichten des ersten Nachrichtenflusses zu einer ersten Nachrichtenflusssequenz;
Abgleichen (410) der ersten Nachrichtenflusssequenz mit mindestens einem Referenz-Multi-Protokoll-Nachrichtenfluss des Referenzsatzes; und
Bestimmen (412), in Reaktion auf das Erkennen einer Abweichung zwischen der ersten Nachrichtenflusssequenz und dem mindestens einen Referenz-Nachrichtenfluss, dass die erste Nachrichtenflusssequenz potenziell fehlerhaft ist.

13. Verfahren nach Anspruch 12, wobei das Extrahieren protokollspezifischer Nachrichten aus dem ersten Nachrichtenfluss umfasst:
Decodieren protokollspezifischer Nachrichten durch einen entsprechenden protokollspezifischen Decodierer; Bestimmen von Feldern der protokollspezifischen Nachrichten, die zum Identifizieren von Nachrichtenflusssequenzen verwendbar sind, und
Bereitstellen der Felder mit zugehörigen Kennzeichnungen.

14. Verfahren nach Anspruch 13, wobei ein Teil der identifizierten Felder als protokollübergreifende Kennzeichnungen verwendbar ist.

15. Verfahren nach Anspruch 13 oder 14, wobei das Korrelieren (408) der protokollspezifischen Nachrichten des ersten Nachrichtenflusses zu der ersten Nachrichtenflusssequenz umfasst:
Abgleichen der protokollspezifischen Nachrichten verschiedener Protokolle auf der Grundlage der Kennzeichnungen; und
Anordnen der protokollspezifischen Nachrichten verschiedener Protokolle in der ersten Nachrichtenflusssequenz auf der Grundlage eines Zeitstempels und/oder einer Sequenznummer jeder protokollspezifischen Nachricht.

## Revendications

1. Appareil (500) comprenant :
des moyens pour fournir (500) un ensemble de référence (504) de flux de messages multi-protocoles réalisés dans un premier système de communication, dans lequel ledit ensemble de référence comprend une pluralité de flux de messages multi-protocoles de référence ayant divers scénarios de flux de messages de haut niveau, dans lequel lesdits scénarios de flux de messages de haut niveau correspondent à des services de communication ;
des moyens pour obtenir (500) un premier flux de messages réalisé dans le premier ou un second système de communication ;
des moyens pour extraire (512) des messages spécifiques au protocole dudit premier flux de messages ;
des moyens pour identifier (512) les messages spécifiques au protocole du premier flux de messages sur la base de caractéristiques spécifiques au protocole desdits messages ;
des moyens pour corréler (518c) les messages spécifiques au protocole du premier flux de messages en une première séquence de flux de messages ;
des moyens pour mettre en correspondance (534) la première séquence de flux de messages avec au moins un flux de messages multi-protocoles de référence dudit ensemble de référence ; et
des moyens pour déterminer, en réponse à la détection d'un écart entre la première séquence de flux de messages et ledit au moins un flux de messages multi-protocoles de référence, que la première séquence de flux de messages est potentiellement défectueuse.

2. Appareil selon la revendication 1, dans lequel lesdits moyens pour extraire des messages spécifiques au protocole dudit premier flux de messages comprennent
des moyens pour décoder (512a) des messages spécifiques au protocole par un décodeur spécifique au protocole correspondant ;
des moyens pour déterminer (512b) des champs des messages spécifiques au protocole utilisables pour identifier des séquences de flux de messages, et
des moyens pour fournir (512c) lesdits champs avec des étiquettes associées.

3. Appareil selon la revendication 2, dans lequel une partie des champs identifiés sont utilisables comme étiquettes inter-protocoles.

4. Appareil selon la revendication 2 ou 3, dans lequel lesdits moyens pour corréler les messages spécifiques au protocole du premier flux de messages en la première séquence de flux de messages comprennent
des moyens pour mettre en correspondance les messages spécifiques au protocole de différents protocoles sur la base des étiquettes ; et
des moyens pour agencer (518a) les messages spécifiques au protocole de différents protocoles dans la première séquence de flux de messages sur la base d'un horodatage et/ou d'un numéro de séquence de chaque message spécifique au protocole.

5. Appareil selon l'une quelconque des revendications précédentes, comprenant
des moyens pour déterminer (532) un scénario de flux de messages de haut niveau pour la première séquence de flux de messages ; et
des moyens pour mettre en correspondance (534) la première séquence de flux de messages avec au moins un flux de messages multi-protocoles de référence dudit ensemble de référence ayant un scénario de flux de messages de haut niveau correspondant.

6. Appareil selon la revendication 5, dans lequel lesdits moyens pour déterminer le scénario de flux de messages de haut niveau pour la première séquence de flux de messages comprennent
des moyens pour agencer la première séquence de flux de messages dans une trame de données structurée ; et
des moyens pour compléter la trame de données structurée avec des champs associant différents messages au même flux de messages.

7. Appareil selon l'une quelconque des revendications précédentes, dans lequel lesdits moyens pour mettre en correspondance la première séquence de flux de messages avec au moins un flux de messages multi-protocoles de référence dudit ensemble de référence comprennent
des moyens pour rechercher un flux de messages multi-protocoles de référence dans ledit ensemble de référence, fournissant une mesure minimale de similarité avec la première séquence de flux de messages, en comparant des distances de chaînes entre la première séquence de flux de messages et un ou plusieurs flux de messages multi-protocoles de référence dudit ensemble de référence, le flux de messages multi-protocoles de référence fournissant la distance de chaîne minimale étant mis en correspondance avec la première séquence de flux de messages.

8. Appareil selon l'une quelconque des revendications précédentes, comprenant
des moyens pour collecter un ensemble de fichiers à partir d'une ou plusieurs interfaces réseau entre une pluralité d'éléments de réseau du système de communication, dans lequel ledit ensemble de fichiers comprend des paquets de flux de messages multi-protocoles ; et
des moyens pour obtenir ledit premier flux de messages à partir dudit ensemble de fichiers.

9. Appareil selon la revendication 8, comprenant
des moyens pour obtenir une pluralité de flux de messages à partir dudit ensemble de fichiers ;
des moyens pour corréler des messages spécifiques au protocole de la pluralité de flux de messages en une pluralité de séquences de flux de messages ; et
des moyens pour identifier une pluralité d'éléments de réseau du système de communication impliqués dans ladite pluralité de séquences de flux de messages.

10. Appareil selon la revendication 9, comprenant
des moyens pour identifier des rôles de pluralité d'éléments de réseau du système de communication impliqués dans ladite pluralité de séquences de flux de messages.

11. Appareil selon l'une quelconque des revendications précédentes, comprenant
des moyens pour ajouter la première séquence de flux de messages à l'ensemble de référence de flux de messages multi-protocoles.

12. Procédé comprenant :
fournir (400) un ensemble de référence de flux de messages multi-protocoles réalisés dans un premier système de communication, dans lequel ledit ensemble de référence comprend une pluralité de flux de messages multi-protocoles de référence pour divers scénarios de flux de messages de haut niveau, dans lequel lesdits scénarios de flux de messages de haut niveau correspondent à des services de communication ;
obtenir (402) un premier flux de messages réalisé dans le premier ou un second système de communication ;
extraire (404) des messages spécifiques au protocole dudit premier flux de messages ;
identifier (406) les messages spécifiques au protocole du premier flux de messages sur la base de caractéristiques spécifiques au protocole desdits messages ;
corréler (408) les messages spécifiques au protocole du premier flux de messages en une première séquence de flux de messages ;
mettre en correspondance (410) la première séquence de flux de messages avec au moins un flux de messages multi-protocoles de référence dudit ensemble de référence ; et
déterminer (412), en réponse à la détection d'un écart entre la première séquence de flux de messages et ledit au moins un flux de messages de référence, que la première séquence de flux de messages est potentiellement défectueuse.

13. Procédé selon la revendication 12, dans lequel ladite extraction de messages spécifiques au protocole dudit premier flux de messages comprend
décoder des messages spécifiques au protocole par un décodeur spécifique au protocole correspondant ; déterminer des champs des messages spécifiques au protocole utilisables pour identifier des séquences de flux de messages, et
fournir lesdits champs avec des étiquettes associées.

14. Procédé selon la revendication 13, dans lequel une partie des champs identifiés sont utilisables comme étiquettes inter-protocoles.

15. Procédé selon la revendication 13 ou 14, dans lequel ladite corrélation (408) des messages spécifiques au protocole du premier flux de messages en la première séquence de flux de messages comprend
mettre en correspondance les messages spécifiques au protocole de différents protocoles sur la base des étiquettes ; et
agencer les messages spécifiques au protocole de différents protocoles dans la première séquence de flux de messages sur la base d'un horodatage et/ou d'un numéro de séquence de chaque message spécifique au protocole.
